# EUROPÄISCHE PATENTSCHRIFT

(11) **EP 1 131 686 B1**
(45) Veröffentlichungstag und Bekanntmachung des Hinweises auf die Patenterteilung: **23.04.2003**
(21) Anmeldenummer: 99960863.1
(22) Anmeldetag: 05.11.1999
(51) Int. Cl.: G05B 19/042

(54) **VERFAHREN ZUR STEUERUNG TECHNISCHER PROZESSE**
METHOD FOR CONTROLLING TECHNICAL PROCESSES
PROCEDE DE COMMANDE DE PROCESSUS TECHNIQUES

(30) Priorität: 18.11.1998 DE 19853205
(43) Veröffentlichungstag der Anmeldung: 12.09.2001
(73) Patentinhaber: SIEMENS AKTIENGESELLSCHAFT, 80333 München (DE)
(72) Erfinder: HESS, Karl, D-09244 Lichtenau (DE); HEBER, Tino, D-09599 Freiberg (DE); KIRSTE, Steffen, D-09439 Amtsberg (DE); HORN, Wolfgang, D-09337 Hohenstein-Ernstthal (DE); KOSEL, Norbert, D-09112 Chemnitz (DE)
(86) Internationale Anmeldenummer: DE9903550
(87) Internationale Veröffentlichungsnummer: WO00029917

(56) Entgegenhaltungen:
- EP-A- 0 829 801
- WO-A-91/19237
- DE-A- 19 740 550
- US-A- 5 576 946
- HAJJAR M N ET AL: "LES OBJETS, AVENIR DU CONTROLE DE PROCEDES" MESURES REGULATION AUTOMATISME,FR,CFE. PARIS, Bd. 60, Nr. 682, 1. Februar 1996 (1996-02-01), Seiten 81-83, XP000556561 ISSN: 0755-219X
- HILDING ELMQVIST: "A UNIFORM ARCHITECTURE FOR DISTRIBUTED AUTOMATION" ADVANCES IN INSTRUMENTATION AND CONTROL,US,INSTRUMENT SOCIETY OF AMERICA, RESEARCH TRIANGLE PARK, Bd. 46, Nr. PART 02, 1. Januar 1991 (1991-01-01), Seiten 1599-1608, XP000347589 ISSN: 1054-0032
- DREWS H ET AL: "LEITTECHNISCHES KONZEPT FUER ZEMENTWERKE" ELEKTRIE,DD,VEB VERLAG TECHNIK. BERLIN, Bd. 47, Nr. 2, 1. Januar 1993 (1993-01-01), Seiten 47-51, XP000363798 ISSN: 0013-5399

## Beschreibung

Die vorliegende Erfindung betrifft ein Verfahren zur Steuerung technischer Prozesse, insbesondere zur Bewegungssteuerung von Produktionsmaschinen, wobei mittels einer zentralen Recheneinheit ein Steuerungsprogramm abgearbeitet wird, das auf einer Instanziierbarkeit sowie einer bedarfsgerechten Verschaltung von Softwarekomponenten mit vorgebbarer, zumindest parametrierbarer Funktionalität basiert.

Bisher bekannte Verfahren zur Automatisierung technischer Prozesse basieren im wesentlichen entweder auf einer "SPS-Funktionalität" oder auf einer "CNC-Funktionalität". Da im Rahmen solcher Funktionalitäten ein gewisser Funktionsumfang fest vorgegeben ist, ist eine optimale Anpassung an die Anforderungen eines speziellen Prozesses häufig nur bedingt möglich, wobei im konkreten Anwendungsfall oft eine ganze Gruppe von Funktionen überflüssig ist (z.B. beim Einsatz einer CNC-Steuerung, die eigentlich für Werkzeugmaschinen konzipiert ist, an Verpackungsmaschinen).

Des weiteren existieren im Hinblick auf den jeweiligen Anwendungsfall individuell ausgelegte Einzwecksteuerungen in Form speziell programmierter Steuerungssoftware.

Aus der DE 197 40 550 ist außerdem ein Verfahren zur Projektierung und/oder Programmierung einer Softwareapplikation zur Steuerung und/oder Überwachung eines technischen Prozesses bzw. eine Vorrichtung zum Steuern eines technischen Prozesses und/oder zur Steuerung der Bewegung einer Verarbeitungsmaschine bekannt, die ein Steuerprogramm abarbeitet. Dieses Steuerprogramm besteht-aus einer Vielzahl von Software-Modulen. Prozesssteuerungsfunktionalitäten von an sich bekannten speicherprogrammierbaren Steuerungen und Bewegungsfunktionalitäten von an sich bekannten NC-Steuerungen sind in einem einheitlichen, konfigurierbaren Steuerungssystem verwirklicht. Die einzelnen Software-Module werden hier jedoch durch jeweils eine Teilsteuerung abgearbeitet, so dass für jedes Software-Modul eine zentrale Recheneinheit vorzusehen ist.

Aus der WO 91 19237 und aus der Schrift von Hilding Elmqvist mit dem Titel: "A uniform architecture for distributed automation" (Advances in Instrumentation and control, US, Instrument Society of America, Research Triangle Park, Bd. 46, Nr. Part 02, 1. Januar 1991 (1991-01-01), Seiten 1599-1608, XP000347589 ISSN: 1054-0032) ist außerdem ein graphisches E-ditierverfahren unter Einbindung graphischer Objekte und graphischer Module zum Programmieren von Programmen zur Steuerung eines technischen Prozesses bekannt.

Ein Artikel von Hajjar M N ET AL: "LES OBJETS; AVENIR DU CONTROLE DE PROCÉDÉS" in MESURES REGULATION AUTOMATISME, Fr, CFE. Paris, Bd. 60, Nr. 682, 1. Februar 1996 (1996-02-01), Seiten 81-83, XP000556561, ISSN: 0755-219X, skizziert rudimentäre Eigenschaften von Software-Objekten in der Prozesstechnik.

Aufgabe der vorliegenden Erfindung ist es, das Zusammenfügen des Steuerungsprogramms zu vereinfachen und die Anzahl der notwendigen zentralen Recheneinheiten zu verringern.

Diese Aufgabe wird mittels eines Verfahrens zur Projektierung bzw. Programmierung einer Softwareapplikation zur Steuerung und/oder Überwachung eines externen technischen Prozesses dadurch gelöst, dass instanziierbare Basis-Objekttypen mit adressierbaren Schnittstellen zur Parametrierung und Verschaltung vorgesehen sind, dass als instanziierbare Basis-Objekttypen zumindest ein Programmverarbeitungs-Objekttyp zur Abarbeitung eines benutzerdefinierbaren Programms und zumindest ein Treiber-Objekttyp zur Ansteuerung der Prozesshardware vorgesehen ist und dass die Projektierung zumindest die Schritte der Selektion, Parametrierung und Verschaltung der Basis-Objekte umfasst.

Das Steuerungsprogramm besteht somit im wesentlichen aus Software-Objekten mit adressierbaren Schnittstellen. Zur Projektierung und Programmierung einer konkreten Softwareapplikation wählt der Projektierer/Programmierer aus einer Menge vordefinierter Basis-Objekttypen die für das jeweilige Automatisierungsvorhaben erforderlichen Basis-Objekttypen aus. Die Selektion eines Basis-Objekttyps entspricht im Rahmen der Projektierung/Programmierung der Instanziierung des entsprechenden Basis-Objekttyps. Die jeweilige Instanz eines Basis-Objekttyps ist ein Basis-Objekt. Mittels der Schnittstellen der Basis-Objekte sind die Basis-Objekte parametrier- und verschaltbar, so dass sich die jeweils entsprechend der konkreten Anforderungen ausgewählten Basis-Objekte über ihre Schnittstellen zu einem Steuerungsprogramm zusammenzufügen lassen und somit schließlich eine Softwareapplikation für konkrete Steuerungsfunktionen bilden.

Als Basis-Objekttypen kommen Objekttypen mit grundsätzlich vorgegebener Funktionalität in Frage. Ein Programmverarbeitungs-Objekt ermöglicht die Ausführung einer konkreten durch den jeweiligen Benutzer individuell für jedes Programmverarbeitungs-Objekt vorgebbaren Anweisungsfolge.

Zur Ansteuerung der Prozesshardware sind die Treiber-Objekte vorgesehen, wobei für unterschiedliche Hardwarekomponenten jeweils unterschiedliche Treiber-Objekte vorgesehen sind, auch wenn in der nachfolgenden Beschreibung verkürzt nur noch von Treiber-Objekten gesprochen wird.

Gemäß der Erfindung kann vorteilhafterweise bei der Programmierung bzw. Projektierung eine Selektion eines Basis-Objektes erfolgen welches mittels der Schnittstellen der Basis-objekte parametrier- und verschaltbar ist, so dass sich die jeweils entsprechend der konkreten Anforderungen ausgewählten Basis-Objekte über ihre Schnittstellen zu einem Steuerungsprogramm zusammenzufügen lassen und somit schließlich eine Softwareapplikation für konkrete Steuerungsfunktionen bilden.

Vorteilhafterweise ist als ein instanziierbarer Basis-Objekttyp (BO) zumindest ein Programmverarbeitungs-Objekttyp (PPO) zur Abarbeitung von IAP-Sequenzen vorgesehen. Der Programmverarbeitungs-Objekttyp stellt dabei eine Art virtuelle Maschine dar.

Vorteilhaft kann zur Vorgabe einer Führungsgröße für eine Hardware-Teilkomponente des technischen Prozesses ist als instanziierbarer Basis-Objekttyp ferner ein Führungsgrößen-Objekttyp vorgesehen sein.

Darüber hinaus oder alternativ kann zur Regelung einer Hardware-Teilkomponente des externen technischen Prozesses als instanziierbarer Basis-Objekttyp ein Regler-Objekte vorgesehen sein.

Vorteilhafterweise erfolgt die Projektierung/Programmierung auf einem Engineering-System, während die Software-Applikation auf einem Runtime-System zur Ausführung kommt. Die Projektierung bzw. Programmierung ist damit unabhängig von der Ausführung der jeweiligen konkreten Software-Applikation.

Die Erfindung erfasst nicht nur die Projektierung/Programmierung einer Software-Applikation sondern auch die jeweilige gemäß der Erfindung projektierte/programmierte konkrete Software-Applikation, insofern als die Steuerung und/oder Überwachung des technischen Prozesses mittels einer gemäß dem erfindungsgemäßen Verfahren projektierten bzw. programmierten Software-Applikation erfolgt. Die Software-Applikation zeichnet sich durch die jeweils verwendeten Basis-Objekte und deren konkrete Verschaltung aus.

Weitere Merkmale, Vorteile und Anwendungsmöglichkeiten der Erfindung ergeben sich aus den Unteransprüchen, der nachfolgenden Beschreibung eines Ausführungsbeispiels anhand der Figuren und der Figuren selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Dabei zeigt
- **FIG 1**: eine exemplarische Struktur einer Bewegungssteuerungsapplikation (MC-Applikation),
- **FIG 2**: eine Detailansicht einer Komponente einer MC-Applikation mit einem Programmverarbeitungs-Objekt und einer Hardwareanbindung über entsprechende Treiber-Objekte und
- **FIG 3**: eine schematische Darstellung der Entwicklungsumgebung zur Projektierung bzw. Programmierung der MC-Applikation auf einem Engineering-System einerseits und zum Ablauf der projektierten bzw. programmierten MC-Applikation auf einem Runtime-System andererseits,
- **FIG 4**: ein Objekt-Modell,
- **FIG 5**: Interface-Definitionen und
- **FIG 6**: eine Objektstruktur einer Schlauchbeutelmaschine.

Jedes Automatisierungsvorhaben setzt auf Seiten des zu automatisierenden Prozesses auf einem Sortiment von Hardwarebaugruppen auf. Im Falle eines Bewegungssteuerungssystems, das im Rahmen der nachfolgenden Beschreibung vordringlich betrachtet werden soll, sind dies z.B. Einachs-, Dreiachs-, Vierachsbaugruppen mit entsprechenden Antrieben.

Auf der Software-Seite ist zur Handhabung der üblicherweise verarbeitungs-asynchron zu berücksichtigenden Ereignisse des technischen Prozesses ein Echtzeitbetriebssystem und darüber hinaus ein Netzwerk zum Aufbau eines dezentralen Steuerungssystems mit verteilter Steuerungsfunktionalität erforderlich.

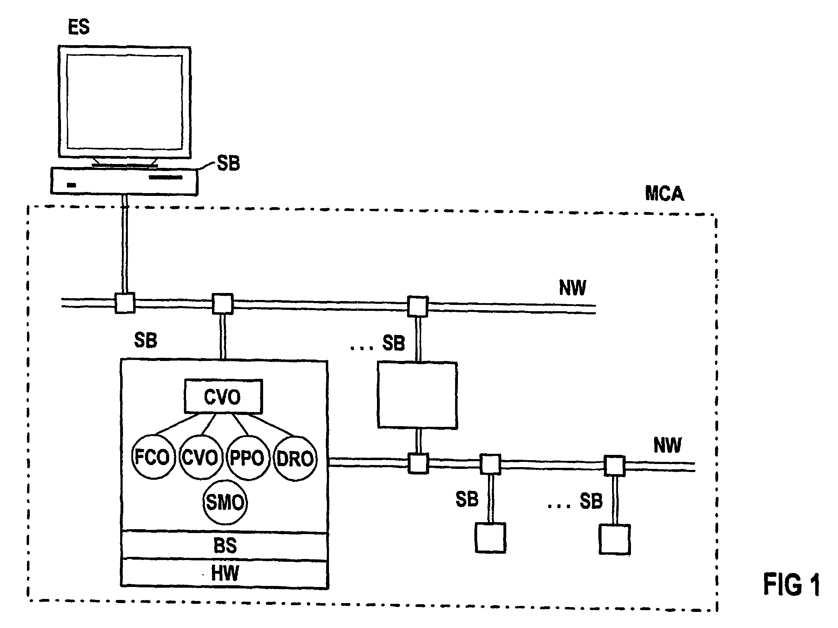

Das in **FIG 1** dargestellte Bewegungssteuerungssoftwaresystem, im folgenden MC-Softwaresystem, umfasst zumindest ein Engineeringsystem ES (Off-Line) und ein Runtimesystem RS (On-Line).

Das ES dient dabei dem Anwender zur Erstellung einer Bewegungssteuerungsapplikation, im folgenden MC-Applikation MCA genannt. Das RS übernimmt deren Ausführung.

Zur Erstellung einer MCA gehören die Systemkonfiguration, die Erstellung der Anwenderprogramme auf Hochsprachenniveau und die Überführung dieser Informationen in eine RS-intern ausführbare Form (Executable). Das RS dient der Ausführung des Executables.

Jede in Rahmen des RT zum Einsatz kommende Hardwarekomponente wird als Systembaustein SB bezeichnet. Es kann aus einem oder mehreren, über ein Netzwerk NW verbundenen SB's bestehen. SB's sind dabei Prozessrechner mit dedizierter, auf die Steuerungsfunktionalität zugeschnittener Peripherie (auch PC möglich), auf denen notwendige und optionale RS-Komponenten ablaufen.

Das Engineeringsystem ES läuft auf einem Programmiergerät oder Personal Computer unter einem Standardbetriebssystem ab. Das ES besitzt für Inbetriebnahme- bzw. Testzwecke dieses Executables einen Zugang zum RS.

Die konkrete Steuerungsstruktur entsteht durch Verschaltung von auf den SB's, gemäß **FIG 1,** instanziierbaren sogenannten Basis-Objekten BO, die mit unterschiedlicher Funktionalität ausgestattet sind. Je nach Anwendung können die Basis-Objekte BO auf SB' verteilten (instanziiert) werden. Des weiteren weist zum Zugriff auf die Standardhardware HW grundsätzlich jeder Systembaustein SB ein Betriebssystem BS auf. Beispiele für Basis-Objekte BO sind:
- Regler-Objekte FCO für verschiedene Reglerfunktionen,
- Führungsgrößen-Objekte CVO als Führungsgrößenerzeuger, die vor allem Bewegungsbefehle ausführen,
- Programmverarbeitungs-Objekte PPO zur Abarbeitung vorgebbarer Anwenderprogramme,
- Treiber-Objekte DRO zur Anpassung der Steuerung an Schnittstellen der verschiedene Hardwarebaugruppen sowie
- Systemmanager-Objekte SMO als Schnittstelle zum Betriebssystem,
- Hochlauf-Objekt BOO (Boot-Objekt) zur Speicherung des Executables der MCA und zur Organisation des Systemanlaufs.

Alle Basis-Objekte BO außer den Systemmanager-Objekten SMO und einigen Treiber-Objekten DRO sind von "außen" - also durch den Projektierer oder Entwickler - instanziierbar. Die Basis-Objekte BO selbst existieren in der Steuerung als Firmware des RS.

Bei den Basis-Objekten BO wird unterschieden zwischen anwenderkonfigurierbaren Funktional-Objekten und notwendigen System-Objekten. Anwenderkonfigurierbare Funktional-Objekte sind z.B. die Regler-Objekte FCO, die Führungsgrößen-Objekte CVO, die Programmverarbeitungs-Objekte PPO, einige Treiber-Objekte DRO und ein RS-weites exklusives Hochlauf-Objekt BOO. Notwendige System-Objekte sind dagegen die Systemmanager-Objekte SMO und spezielle Treiber-Objekte DRO.

Funktional-Objekte FCO, CVO und PPO sind typische Objekte zur Projektierung einer Steuerungslösung nach den Anforderungen der jeweiligen Anwendung. Notwendige System-Objekte SMO, DRO werden zum Netzwerkzugang auf einem Systembaustein SB bei Anlauf der Firmware angelegt und verschaltet und sind von außen nicht instanziierbar. Damit ist der Zugang auf jede Hardware HW gewährleistet.

Eine MC-Applikation MCA wird durch Verschaltung, Konfiguration und Anwenderprogrammierung (bei PPO's) von Basis-Objekten erreicht. Vorkonfigurierte BO-Gruppen können im ES gebildet und/oder verarbeitet werden. Damit erfolgt eine Makro-Bildung in Form von Applikationsmodulen SAM auf Anwenderebene.

Die Verschaltung der Basis-Objekte BO wird grundsätzlich von "außen" mittels des ES konfiguriert und im Executeable abgelegt. Die Herstellung der realen Verschaltung erfolgt auf Grund dieser, im Excutable enthaltenen Informationen durch das BOO oder das ES.

Die Verschaltung der Basis-Objekte BO erfolgt über dafür vorgesehene Schnittstellen an den BO's. Diese Schnittstellen sind im RS und ES eindeutig adressierbar. Es wird zwischen optionalen und nichtoptionalen Schnittstellen unterschieden. Nichtoptionale Schnittstellen dienen allgemeinen Systemfunktionen wie dem Empfang von Konfigurationsdaten, dem Variablenaustausch oder für Debug- und Trace-Zwecke. Optionale Schnittstellen repräsentieren funktionale Spezifika eines BO's nach außen.

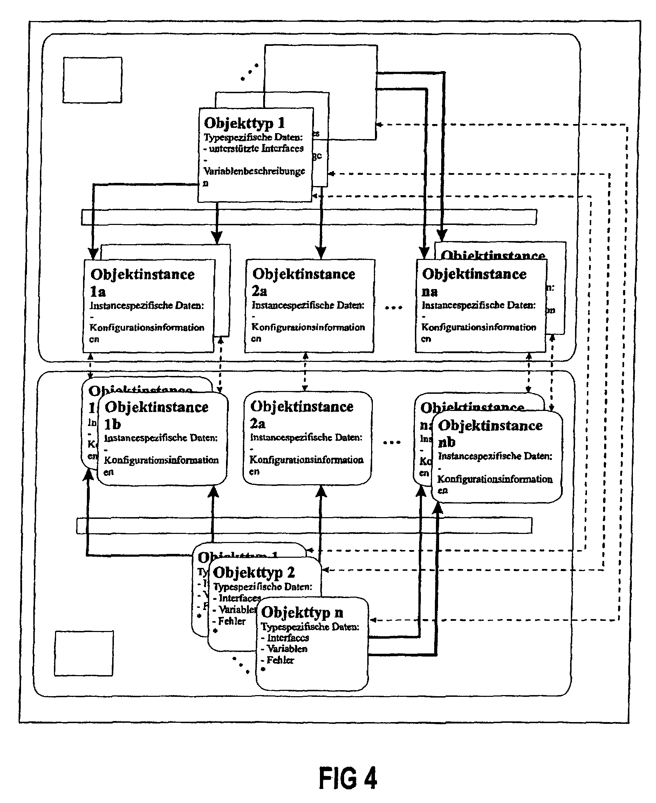

Das ES benutzt zur Repräsentation von BO-Typen bzw. -Instanzen im RS Stellvertreter-Objekte bzw. Instanzen als duale Darstellung. Über diese Stellvertreter-Objekte erhält das ES Informationen über die Eigenschaften von BO's und (bei aktivem RS-Zugang) Zugang zu den BO's und deren Schnittstellen im RS. Diese Beziehungen sind in **FIG 4** dargestellt.

Schnittstellen im Engineeringsystem (ES-Interfaces):
Alle Basis-Objektklassen verfügen als nicht optionale ES-Interfaces über Kommando- und Konfigurationsschnittstellen, wobei bei Bedarf eine Trennung erfolgen kann. Weitere optiooptionale ES-Interfaces sind Variablen-Schnittstellen, Debug-Schnittstellen bzw. Trace-Schnittstellen.

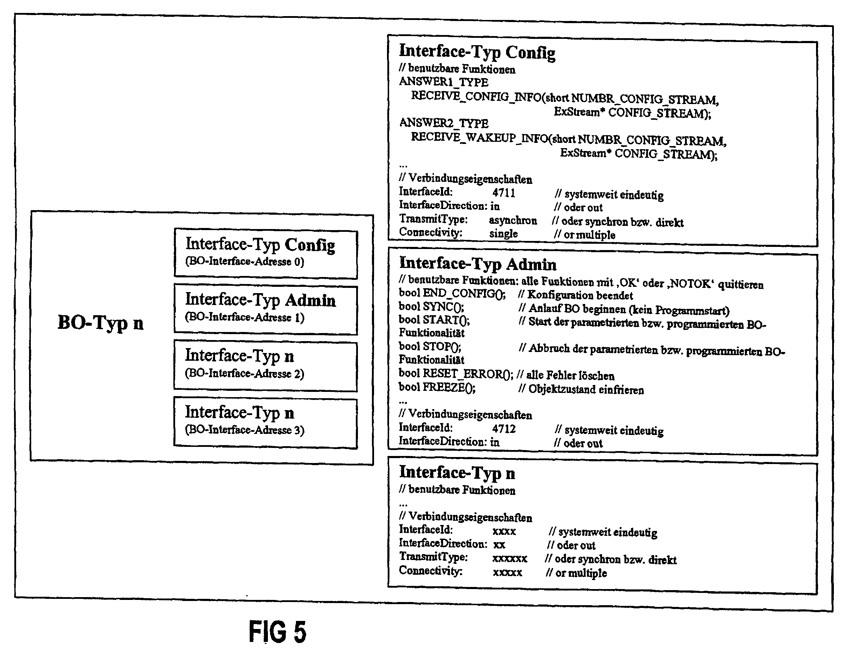

In **FIG 5** sind Objektschnittstellen beschrieben, wobei zur Verknüpfung von zwei Schnittstellen folgende Matching-Regeln (alle AND-verknüpft) verwendet werden:
Verknüpft wird wenn:
   1. die InterfaceId's gleich sind
   2. die InterfaceDirection komplementär zueinander sind
   3. der TransmitType gleich ist
   4. die Connectivity dies noch zulässt.

Schnittstellen im Laufzeitsystem RS (RS-Interfaces):
Die Festlegung der RS-Interfaces erfolgt im Bewegungssteuerungslaufzeitsystem direkt. Die Schnittstellen werden im Engineeringsystem ES über Typkennungen verwaltet und adressiert, so dass deren Verschaltung möglich ist.

Zur Verschaltung der Basis-Objekte BO zu einer konkreten Steuerung ist das auf einem Personal Computer/Programmiergerät ablaufende Engineeringsystem ES vorgesehen, das Off-Line arbeitet und auf Abbilder sämtlicher Basis-Objekte BO Zugriff hat. Im Einzelfall kann die Verschaltung der Basis-Objekte BO alternativ auch über ein "internes" Hochlauf-Objekt BOO vorgenommen werden.

Mit Hilfe des Engineeringsystems ES wird die konkrete Steuerungslösung programmiert und unter Einsatz entsprechender Werkzeuge in Betrieb genommen. Durch die Verschaltung und Konfiguration der Basis-Objekte BO entstehen Applikationsmodule SAM mit bestimmter, den Hardwarebaugruppen entsprechender Funktionalität (Einachsmodul, Mehrachsmodul, etc.).

Die Ausführung einer konkret projektierten Softwarestruktur erfolgt im Runtimesystem RS.

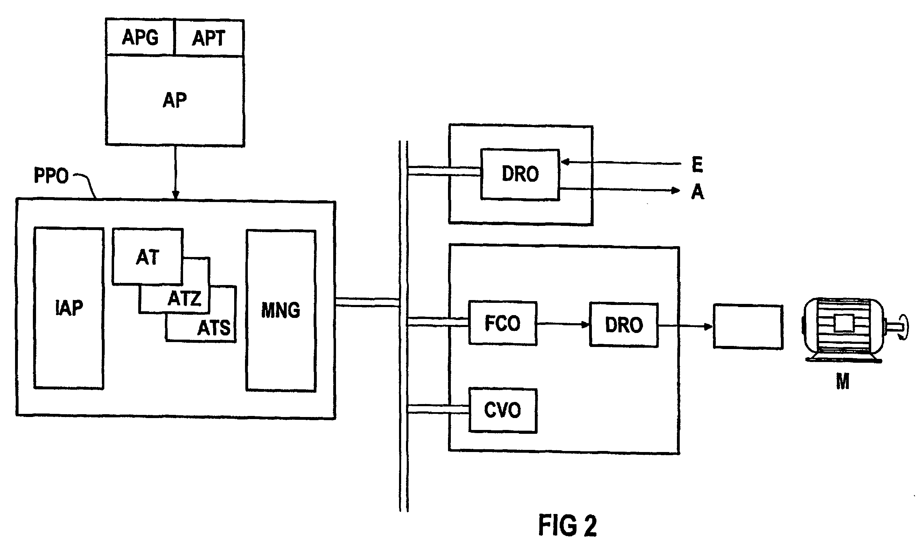

Die wichtigsten Basis-Objekte BO, sind die Regler-Objekte FCO, die Führungsgrößen-Objekte CVO und die Programmverarbeitungs-Objekte PPO, wobei im folgenden diese Objekte, beginnend mit dem Programmverarbeitungs-Objekt PPO, anhand von **FIG 2** näher dargestellt werden.

Ein Programmverarbeitungs-Objekt PPO ist primär eine zur Abarbeitung eines Anwenderprogramms AP fähige virtuelle Maschine. Das Programmverarbeitungs-Objekt PPO beinhaltet alle Funktionen zur Ausführung einer Befehlssequenz in einem zeitlichen Multi-Tasking-Kontext. Das jeweilige Anwenderprogramm AP ist in einer speziellen Assemblerkodierung MCASM der virtuellen Maschine abgelegt, nachdem es auf dem Engineeringsystem ES graphisch APG oder textuell APT erstellt, compiliert und von diesem an das jeweilige Programmverarbeitungs-Objekt PPO transferiert wurde. Der Zugang zu BO- und Betriebssystem-funktionalitäten wird somit über den Befehlssatz der virtuellen Maschine realisiert.

Für ein MC-Applikation werden die jeweiligen Steuerungsprogramme direkt in der Art mehrerer Tasks geschrieben und angelegt. Zur Abarbeitung des jeweiligen Steuerungsprogramms werden vom Programmverarbeitungs-Objekt PPO Tasks AT, ATZ, ATS im Multi-Tasking-System angelegt. Diese Tasks können für verschiedene Abarbeitungsmodi eingerichtet werden, wobei z.B. zwischen zyklischer Abarbeitung - zyklische Task ATZ - entsprechend der Arbeitsweise z.B. einer speicherprogrammierbaren Steuerung und einer sequentiellen Abarbeitung - sequentielle Task ATS - z.B. bei der Berechnung einer Bewegung unterschieden wird. Dabei können sich die Tasks selbstverständlich gegenseitig beeinflussen, indem z.B. aus einer zyklischen Task ATZ die Koordination einer sequentiellen Bewegungstask ATS erfolgt. Aus diesen Anwendertasks AT, ATZ, ATS heraus werden weitere Tasks über MCASM-Instruktions zur Nutzung der Funktionen der Regler-Objekte FCO, der Führungsgrößen-Objekte CVO und/oder der Treiber-Objekte DRO angelegt.

Eine einzelne IAP stellt eine Anweisung auf MCASM-Niveau dar. Eine IAP kann PPO-interne und PPO-externe Schnittstellen von anderen BO's bzw. des Betriebssystems zur Realisierung seiner Funktion benutzen. Der Aufbau und die Verwaltung PPO-externer Verbindungen erfolgt durch den MNG. Das PPO startet zur Verarbeitung der geladenen IAP-Sequenz, die im ES aus dem AP erzeugt wurde, eine Default-ATS bei einer definierten IAP (entspricht Programm-Eintrittspunkt). Es existieren IAP's, die eine rekursive Task-Nutzung ermöglichen. Dazu sind im MCASM-Befehlssatz z.B. IAP's vorhanden, die das Erzeugen einer neuen ATS oder ATZ und deren Start ab einer bestimmten IAP innerhalb der IAP-Sequenz ermöglichen.

Neben Standardoperationen eines Rechners, Ein-/Ausgabefunktionen sowie speziellen Funktionen, die ansonsten z.B. von einer speicherprogrammierbaren Steuerung bereitgestellt würden, werden Funktionen zur Berechnung von Bewegungen und zur Regelung benötigt. Diese höheren Funktionen stellen z.B. die Führungsgrößen-Objekte CVO und Regler-Objekte FCO zur Verfügung.

Ein Programmverarbeitungs-Objekt PPO ist primär eine zur Abarbeitung von IAP-Sequenzen fähige virtuelle Maschine. Eine einzelne IAP stellt eine Anweisung auf MCASM-Niveau dar. Sie bildet den programmierbaren Zugang des Anwenders zu den Funktionalitäten der BO's und des BS. Die Erzeugung und der Transfer der IAP-Sequenzen erfolgt in den Schritten:
- Erzeugung eines AP auf textuellem (APT) oder graphischem (APG) Wege im ES.
- Compilation des AP in IAP-Sequenzen (systemspezifische Kodierung; MCASM) der virtuellen Maschine des PPO im ES und Ablegen in einem Executable-File.
- Transfer der IAP-Sequenzen aus dem Executable an das jeweilige PPO durch das ES oder ein BOO.

Eine IAP kann PPO-interne und, PPO-externe Schnittstellen von anderen BO's bzw. des BS zur Realisierung seiner Funktion benutzen. Der Aufbau und die Verwaltung dieser Verbindungen erfolgt durch den MNG.

Die über IAP's zugänglichen Funktionalitäten gliedern sich in:
- Anwender-Multitasking
   Dabei können neue Tasks mit zyklischer (ATZ) bzw. sequentieller (ATS) IAP-Bearbeitung auf der geladenen IAP-Sequenz erzeugt, zerstört und beeinflußt werden. Die dafür definierten IAP's benutzen dazu Funktionalitäten des BS.
- Verarbeitung von Standarddatentypen
   (Zahlen, Strukturierte Datentypen etc.)
- I/O-Operationen
- Zugang zu Spezialfunktionalitäten mit PPO verbundener BO'S wie z.B. CVO zur Bewegungsgenerierung oder FCO zur Regelung.

Der Start der Programmabarbeitung des PPO erfolgt auf Kommando des ES oder BOO über dessen Kommando-Schnittstelle. Dazu wird im PPO eine Default-ATS gestartet, die ihre Arbeit bei einer definierten IAP (entspricht Programm-Eintrittspunkt) der geladenen IAP-Sequenz beginnt.

Um physikalische Geräte M mittels eines Achs-Interfaces oder eines Ein-/Ausgabe-Interfaces über die konkrete Steuerungshardware des Systembausteins SB zu betreiben, werden Treiberobjekte DRO eingeordnet. DRO's dienen der Entkopplung von Objektschnittschnittstellen von der konkreten Hardware, indem sie spezifische Details zu deren Ansteuerung implementieren. Im Ausführungsbeispiel kommt gemäß **FIG 2** zur Ansteuerung des Motors M ein Regler-Objekt FCO, ein Treiber-Objekt DRO und ein Führungsgrößen-Objekt CVO zum Einsatz. Der Ausgangswert des Regler-Objektes FCO dient über das Treiber-Objekt DRO direkt zur Ansteuerung des Motors M. Das Führungsgrößen-Objekt FCO, das in nicht dargestellter Weise mit dem Regler-Objekt FCO verschaltet ist, liefert zumindest die Führungsgröße für die z.B. mittels des Regler-Objektes FCO konstant gehaltene Drehzahl des Motors M. Des weiteren ist noch ein Treiberobjekt DRO für Eingabefunktionen E, mit denen sich z.B. Prozesszustände erfassen lassen, und Ausgabefunktionen A, z.B. zum Einschalten bestimmter Prozesskomponenten, vorgesehen.

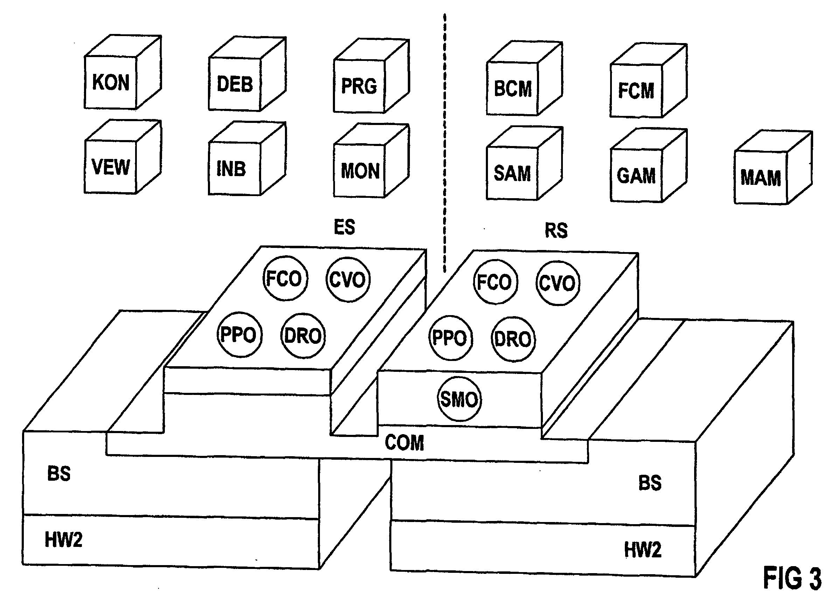

Die Möglichkeiten hinsichtlich Konfiguration, Programmierung, Inbetriebnahme etc. werden nachfolgend anhand von **FIG 3** dargestellt.

Im Engineeringsystem ES wird eine konkrete Steuerungslösung entsprechend der jeweiligen Anforderungen des Kunden unter Einsatz entsprechender Werkzeuge VEW, KON, PRG (Verwaltung, Konfiguration, Programmierung) konfiguriert und programmiert, wobei die Inbetriebnahme durch weitere Werkzeuge INB, MON, DEB (Inbetriebnahme, Monitoring, Debugging) unterstützt wird. Die Ausführung einer konkret projektierten Softwarestruktur mit dem zugehörigem Anwenderprogramm erfolgt im Runtimesystem RS.

Das Engineeringsystem ES ermöglicht demzufolge die ingenieurmäßige Handhabung einer Bewegungssteuerungsapplikation (MC-Applikation) MCA und darüber hinaus auch die Repräsentation des Runtimesystems RS während des Engineerings (also von der Projektierung bis zur Inbetriebnahme).

Dazu hat das Engineeringsystem ES Zugriff auf ein Abbild sämtlicher im Runtimesystem RS ausführbarer Basis-Objekte BO. Demzufolge sind als Basis-Objektklassen zumindest die oben bereits aufgeführten Regler-Objekte FCO, Führungsgrößenobjekte CVO, Programmverarbeitungs-Objekte PPO, Treiber-Objekte DRO und Systemmanager-Objekte SMO vorgesehen.

Sowohl im Engineeringsystem ES als auch im Runtimesystem RS existiert über die Hardware HW (Programmiergerät oder Personal Computer HW1 für Engineeringsystem ES, Steuerungshardware HW2 für Runtimesystem RS) ein vollständiges Laufzeitsystem mit Betriebssystem BS, Werkzeugen zum Systemmanagement und Basis-Objekten BO.

Der Vorteil der vorliegenden Erfindung liegt vor allem darin, dass ein zu automatisierender technischer Prozess mit erhöhter Funktionalität, z.B. im Hinblick auf Logik, Bewegung, Regelung und Messung, erhöhter Dynamik, insbesondere durch entsprechende Anpassung über eine geeignete Hardwareauswahl und flexibler Struktur, z.B. als Stand-Alone, zentrale oder dezentrale bzw. verteilte Lösung, handhabbar ist.

Für die logischen Abläufe, Bewegungsvorgänge oder Regelungen stehen Basiselemente oder Basisfunktionen zur Verfügung. Die Basiselemente sind dabei verbindbare Komponenten, die Basis-Objekte BO, die die Grundkomponenten für Automatisierungsaufgaben mit jeweils einheitlichen Schnittstellen darstellen. Die Basisfunktionen stehen im Rahmen programmierbarer Funktionen zur Verfügung, wobei ein Grundbefehlssatz für Logik, Bewegung (Einzelachse, lose und enge Master-Slave-Kopplung, Geometrie-Verbund) und Regelung verwendbar ist. Diese Struktur ermöglicht eine freie Programmierbarkeit und eine flexible Anpassung an die Gegebenheiten des jeweiligen Automatisierungsvorhabens durch das Instanziieren und das Verbinden der jeweiligen Objekte.

Das Gesamtsystem stellt sich als Kombination aus einem Laufzeitsystem einerseits, mit einem Steuerungskern als verteilbarem Steuerungsbetriebssystem, und einem Engineeringsystem andererseits, das insbesondere die graphische Programmierung des Automatisierungsvorhabens über eine entsprechende Oberfläche ermöglicht, dar.

Diese Struktur kommt insbesondere einer natürlichen Herangehensweise bei der Automatisierung technischer Prozesse entgegen, nämlich einem schrittweisen Vorgehen, das mit der Festlegung der jeweiligen Funktionen beginnt, woraus sich logische Abhängigkeiten einzelner Funktionen oder Funktionsgruppen ergeben bzw. ableiten lassen und sich erst im Rahmen von Detailbetrachtungen mit konkreten Bewegungsvorgängen und dazu eventuell erforderlichen Regelungen befasst.

Dies ermöglicht eine Einheit im Abarbeitungsprinzip, bietet gleichzeitig eine erhebliche Flexibilität bei der Systemgestaltung.

Eine nach diesem Ausführungsbeispiel konzipierte Steuerung kann. beispielsweise angewandt werden für eine Verpackungsmaschine mit fünf Achsen im Hauptbereich, einem Temperaturregler und einem 3-Achs-Handlingsystem.

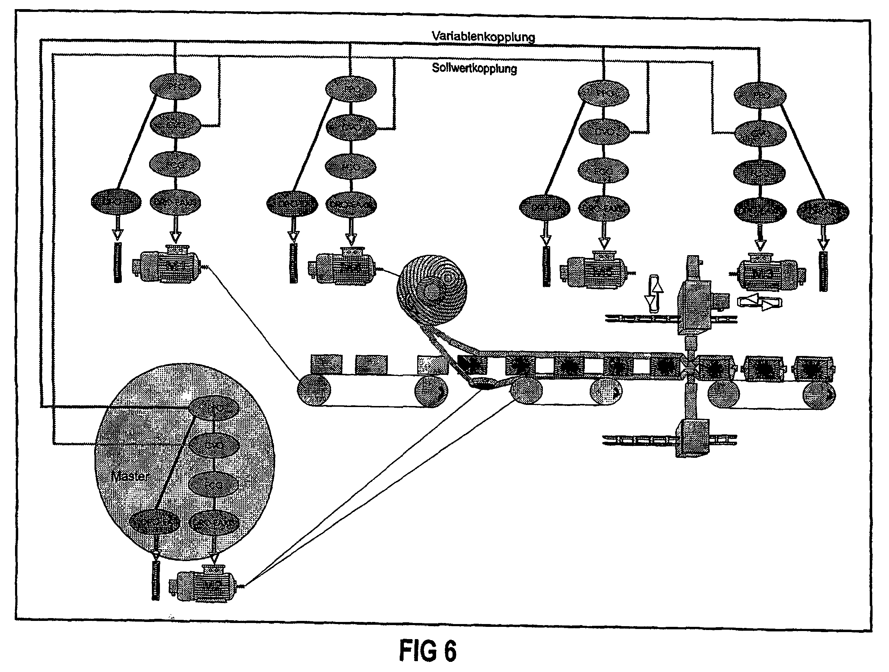

Im folgenden wird auf **FIG 6** verwiesen, in welcher eine Objektstruktur einer Schlauchbeutelmaschine gezeigt ist, wobei folgendes Vorgehen realisiert wird:
- M1: Produkt- Zufuhrbahn
   - Produktlänge konst. oder alternativ Produktabstand konst.
   - Produktlängen- Toleranz ....-20%; soll zur vergleichsweise gleichen Verpackungslängen- Toleranz führen und Verpackungsfolie sparen
   - Produktabstände variabel (sowohl zu dicht als auch zu weit); soll die Verpackungslänge des Produkts nicht beeinflussen
- M2: Längsnaht- Siegelstation (Master-Antrieb)
   - Kontinuierliche Bewegung
   - Folienabzug häufig mit über diesen Antrieb
   - Arbeitswerkzeuge (geheizten Siegelrollen) werden bei Anlagenstillstand über SPS- Steuersignale außer Arbeitsstellung gebracht
- M3: Quersiegelstation X- Richtung
   - Bewegungsablauf:
      - Auf synchronisieren auf Fixpunkt des Verpackungsstrangs (Mitte zwischen zwei Produkten)
      - Synchronlauf zum Fixpunkt
      - Absynchonisieren, Bewegungsumkehr
      - Rückbewegung
      - Zyklusende, Stillstand (nicht zwingend)
      - Aufsynchronisierpunkt über zuvor ermittelte Produktlänge und Formelwerk des Anwenders berechnet, im Anwenderprogramm hinterlegt und über Produkteinstellungen parametrierbar.
      - "Nebenbewegungen"(Absynchronisierkurve, Rückhub) an das Geschwindigkeitsniveau der Masterachse angepasst
- M4: Folienrollenantrieb
   - Bewegungsanforderungen eines Wickelantriebs (Zentralwickler)
   - Durchmessererfassung und Auswertung
   - Einsatz insbesondere bei glatter Folie
   - Steuermarken bei bedruckter Folie erfassen und Differenzen der Lieferung über Elastizität der Folie ausgleichen
- M5: Quersiegelstation Y- Richtung
   - Bewegungsablauf:
      - Schließen des Siegelwerkzeugs nach dynamisch optimierter Funktion (gegenwärtig häufig auftretende Beschleunigungs- und Bremsgeräusche sind unerwünscht)
      - Schließgeräusch der Siegelbacken ("Klatschen") sollen nicht auftreten, aber eine sichere Berührung ist erforderlich (Gleichnis "Pressen im letzten Bewegungsabschnitt" benutzt)
      - Dynamische Anpassung der Schließbewegung an die Elastizität und Lose der Schließmechanik erfordert Anpassung
      - Anpassung zeigt sich gegenwärtig stark geschwindigkeitsabhängig (neuer Arbeitspunkt neue Einstellung)
      - Zusätzliche Randparametern des Schließprofils Folienmitnahme (extra beschleunigungsbegrenzt)
      - Verweilzeit im geschlossenen Zustand (konstant?)
      - Schwellendes Moment über Drehmomenteriregelung in der Verweilzeit
      - Öffnung der Siegelbacken nach, einer zweiten Funktion
      - Zyklusende; Stillstand
   - Bewegungshub der Siegelbacken von der Produkthöhe abhängig (Verstellung?, Messeingang auswerten?)
   - Verknüpfung der Bewegungsprofile X- und Y-Antrieb (Schließbewegung beginnt bereits vor dem Erreichen des Synchronpunkts ??; Absynchronisieren beginnt vor vollständiger Öffnung ??) ist noch zu betrachten
   - An die Schließbewegung ist das Schneidsignal zu koppeln (dynamisch hochwertiger Ausgang; über SPS zu langsam)

Zusammenfassend lässt sich die Erfindung wie folgt kurz beschreiben:

Das Bewegungssteuerungssystem ist ein programmierbares, dezentral und flexibel aus verschiedenen Hardwarebaugruppen bestehendes Steuerungssystem, dessen Hardwarebaugruppen als Systembausteine bezeichnet werden.

Aufgrund der Vielschichtigkeit der bei der Bewegungssteuerung von Produktionsmaschinen zu erfüllenden Anforderungen wird von einem Sortiment an Hardwarebaugruppen, die mit ausreichender Rechenleistung, einem Echtzeitbetriebssystem und spezifischer Grundfunktionalität ausgerüstet sind, einem Netzwerk (z.B. Profibus) zum Aufbau eines dezentralen Systems mit verteilter Steuerungsfunktionalität sowie Bedien- und Beobachtungsgeräten mit vorprojektierten Oberflächen ausgegangen. Mit der Erfindung wir ein konfigurier-, verteil- und programmierbares Steuerungssoftwaresystem zur individuellen Anpassung der Steuerungslösung an die Kundenanforderung vorgeschlagen, mit dem die projektierte Steuerungslösung auf Hardwarebaugruppen verteilt wird und wobei ein z.B. auf einem Programmiergerät oder auf einem Personal Computer ablaufendes Engineeringsystem zur Verwaltung, Konfiguration, Programmierung, zum Monitoring, Debugging und zur Inbetriebnahme eingesetzt wird.

## Patentansprüche

1. Verfahren zur Projektierung und/oder Programmierung einer Softwareapplikation zur Steuerung und/oder Überwachung eines technischen Prozesses **dadurch gekennzeichnet, dass** die Software instanziierbare Basis-Objekttypen, welche insbesondere Basis-Objekte wie Regler-Objekte (FCO) für verschiedene Reglerfunktionen, Führungsgrößen-Objekte (CVO) als Führungsgrößenerzeuger, Programmverarbeitungs-Objekte PPO zur Abarbeitung vorgebbarer Anwenderprogramme, Treiber-Objekte (DRO) zur Anpassung der Steuerung an Schnittstellen der verschiedene Hardwarebaugruppen sowie Systemmanager-Objekte (SMO) als Schnittstelle zum Betriebssystem oder Hochlauf-Objekte (BOO) zur Speicherung des Executables sind, mit adressierbaren Schnittstellen zur Parametrierung und Verschaltung aufweist, welche Teil der Firmware des Runtimesystems sind, wobei als instanziierbarer Basis-Objekttyp (BO) zumindest ein Programmverarbeitungs-Objekttyp (PPO) und zumindest ein Treiberobjekttyp (DRO) vorgesehen ist, wobei ein Programmverarbeitungs-Objekttyp (PPO) ein benutzerdefinierbares Programms verarbeitet und ein Treiber-Objekttyp (DRO) die Prozesshardware ansteuert.

2. Verfahren nach Anspruch 1 **dadurch gekennzeichnet, dass** die Projektierung zumindest die Schritte der Selektion, Parametrierung und Verschaltung der Basis-Objekte (BO) umfasst.

3. Verfahren nach wenigstens einem der Ansprüche 1 bis 2, **dadurch gekennzeichnet, dass** als instanziierbarer Basis-Objekttyp (BO) ferner zumindest ein zur Abarbeitung von IAP-Sequenzen fähiger Programmverarbeitungs-Objekttyp (PPO) als virtuelle Maschine vorgesehen ist.

4. Verfahren nach wenigstens einem der Ansprüche 1 bis 3, **dadurch gekennzeichnet, dass** als instanziierbarer Basis-Objekttyp (BO) ferner zumindest ein Führungsgrößen-Objekttyp (CVO) zur Vorgabe einer Führungsgröße für eine Teilkomponente des externen technischen Prozesses vorgesehen ist.

5. Verfahren nach wenigstens einem der Ansprüche 1 bis 4, **dadurch gekennzeichnet, dass** als instanziierbarer Basis-Objekttyp (BO) ferner zumindest ein Regler-Objekt (FCO) zur Regelung einer Teilkomponente des externen technischen Prozesses vorgesehen ist.

6. Verfahren nach wenigstens einem der obigen Ansprüche, **dadurch gekennzeichnet, dass** die Projektierung auf einem Engineering-System (ES) erfolgt und dass die Software-Applikation auf einem Runtime-System (RS) zur Ausführung kommt.

7. Verfahren nach wenigstens einem der Ansprüche 5 oder 6, **dadurch gekennzeichnet, dass** sämtliche Basis-Objekttypen (BO) im Engineering-System (ES) ein Abbild haben.

8. Verfahren zur Steuerung und/oder Überwachung externer technischer Prozesse, **dadurch gekennzeichnet, dass** die Steuerung und/oder Überwachung des technischen Prozesses mittels einer mit einem Verfahren nach einem der obigen Ansprüche für diesen technischen Prozess projektierten bzw. programmierten Software-Applikation erfolgt.

## Claims

1. Method for designing and/or programming a software application to control and/or monitor a technical process, **characterised in that** the software has instantiation-capable basic object types, which are specifically basic objects such as regulator objects (FCO) for different regulator functions, control variable objects (CVO) to generate control variables, program-processing objects (PPO) to execute predefinable user programs, driver objects (DRO) to adapt the controller to the interfaces of the different hardware components and system manager objects (SMO) as an interface to the operating system or boot objects (BOO) to store executables, with addressable interfaces for parameterising and linking purposes, which are part of the firmware of the runtime system, in which at least one program-processing object type (PPO) and at least one driver object type (DRO) is provided as an instantiation-capable basic object type (BO), in which one program-processing object type (PPO) processes a user-definable program and one driver object type (DRO) drives the process hardware.

2. Method according to Claim 1, **characterised in that** the design includes as a minimum the stages of selecting, parameterising and linking the basic objects (BO).

3. Method according to at least one of Claims 1 to 2, **characterised in that** at least one program-processing object type (PPO) capable of executing IAP sequences is also provided as an instantiation-capable basic object type (BO) to operate as a virtual machine.

4. Method according to at least one of Claims 1 to 3, **characterised in that** at least one control variable object type (CVO) is also provided as an instantiation-capable basic object type (BO) to predefine a control variable for a sub-component in the external technical process.

5. Method according to at least one of Claims 1 to 4, **characterised in that** at least one regulator object (FCO) is also provided as an instantiation-capable basic object type (BO) to regulate a sub-component in the external technical process.

6. Method according to at least one of the preceding Claims, **characterised in that** the design is carried out on an engineering system (ES) and the software application is executed on a runtime system (RS).

7. Method according to at least one of Claims 5 or 6, **characterised in that** all the basic object types (BO) have an image in the engineering system (ES).

8. Method for controlling and/or monitoring external technical processes, **characterised in that** the technical process is controlled and/or monitored by means of a software application designed and programmed using a method according to one of the above claims for this technical process.

## Revendications

1. Procédé pour le développement et/ou la programmation d'une application logicielle destinée à la commande et/ou à la surveillance d'un processus technique, **caractérisé par le fait que** le logiciel comporte des types d'objets de base instanciables, qui sont notamment des objets de base comme les objets de régulateur (FCO) pour différentes fonctions de régulateur, des objets de grandeur de commande (CVO) en tant que générateur de grandeur de commande, des objets de traitement de programme (PPO) pour le traitement de programmes d'utilisateur pouvant être prescrits, des objets d'attaque (DRO) pour l'adaptation de la commande à des interfaces des différents modules matériels ainsi que des objets de gestion de système (SMO) en tant qu'interface vers le système d'exploitation ou des objets de démarrage (BOO) pour la mémorisation d'exécutables, avec des interfaces adressables pour le paramétrage et le câblage qui font partie du microprogramme du système à temps d'exécution, au moins un type d'objet de traitement de programme (PPO) et au moins un type d'objet d'attaque (DRO) étant prévus comme types d'objets de base (BO) instanciables et un type d'objet de traitement de programme (PPO) traitant alors un programme pouvant être défini par l'utilisateur et un type d'objet d'attaque (DRO) commandant alors le matériel du processus.

2. Procédé selon la revendication 1, **caractérisé par le fait que** le développement comprend au moins les étapes de la sélection, du paramétrage et du câblage des objets de base (BO).

3. Procédé selon au moins l'une des revendications 1 à 2, **caractérisé par le fait que**, comme type d'objet de base (BO) instanciable, il est prévu en plus en tant que machine virtuelle au moins un type d'objet de traitement de programme (PPO) capable de traiter des séquences IAP.

4. Procédé selon au moins l'une des revendications 1 à 3, **caractérisé par le fait que**, comme type d'objet de base (BO) instanciable, il est prévu en plus au moins un type d'objet de grandeur de commande (CVO) pour la prescription d'une grandeur de commande pour un composant du processus technique externe.

5. Procédé selon au moins l'une des revendications 1 à 4, **caractérisé par le fait que**, comme type d'objet de base (BO) instanciable, il est prévu en plus au moins un objet de régulateur (FCO) pour la régulation d'un composant du processus technique externe.

6. Procédé selon au moins l'une des revendications précédentes, **caractérisé par le fait que** le développement s'effectue sur un système d'ingénierie (ES) et que l'application logicielle est réalisée sur un système à temps d'exécution (RS).

7. Procédé selon au moins l'une des revendications 5 ou 6, **caractérisé par le fait que** tous les types d'objets de base (BO) ont une image dans le système d'ingénierie (ES).

8. Procédé pour la commande et/ou la surveillance de processus techniques externes, **caractérisé par le fait que** la commande et/ou la surveillance du processus technique s'effectue au moyen d'une application logicielle développée ou programmée avec un procédé selon l'une des revendications précédentes pour ce processus technique.
